# EUROPÄISCHE PATENTSCHRIFT

(11) **EP 0 856 135 B1**
(45) Veröffentlichungstag und Bekanntmachung des Hinweises auf die Patenterteilung: **12.01.2000**
(21) Anmeldenummer: 95933292.5
(22) Anmeldetag: 16.10.1995
(51) Int. Cl.: F24D 19/08, B01D 19/00

(54) **VERFAHREN UND VORRICHTUNG ZUR ENTGASUNG EINER FLÜSSIGKEIT IN EINEM IM WESENTLICHEN GESCHLOSSENEN SYSTEM**
PROCESS AND DEVICE FOR DEGASSING A LIQUID IN A SUBSTANTIALLY CLOSED SYSTEM
PROCEDE ET DISPOSITIF DE DEGAZAGE D'UN LIQUIDE CONTENU DANS UN SYSTEME SENSIBLEMENT FERME

(43) Veröffentlichungstag der Anmeldung: 05.08.1998
(73) Patentinhaber: Stücklin & Cie AG, 4414 Füllinsdorf (CH)
(72) Erfinder: STEFFAN, Helmut, D-79589 Binzen (DE); FRIEDRICH, Helmut, CH-4410 Liestal (CH)
(74) Vertreter: Ullrich, Gerhard, Dr.
(86) Internationale Anmeldenummer: CH9500240
(87) Internationale Veröffentlichungsnummer: WO9714922

(56) Entgegenhaltungen:
- EP-A- 0 027 179
- EP-A- 0 652 406
- DE-A- 3 436 833
- FR-A- 1 226 353
- US-A- 3 290 864

## Beschreibung

Die vorliegende Erfindung bezieht sich auf ein Verfahren zur Entgasung einer Flüssigkeit in einem im wesentlichen geschlossenen System, wie es im Oberbegriff des unabhängigen Patentanspruchs 1 definiert ist, und auf eine Vorrichtung zur Durchführung dieses Verfahrens, wie sie im Oberbegriff des unabhängigen Patentanspruchs 11 definiert ist.

Als Druckstufenentgasung bzw. -entgaser bekannte Verfahren und Vorrichtungen dieser Art dienen in erster Linie dazu, die in der Flüssigkeit, insbesondere Wasser, gelösten Gase, insbesondere Luft, in die Aussenluft auszuscheiden, unter anderem um eine Korrodierung der Leitungen des im wesentlichen geschlossenen Systems zu verhindern. Solche Druckstufenentgaser werden z.B. in Heizungssystemen eingesetzt.

Die Druckstufenentgasung beruht auf dem Prinzip, dass - je höher der Druck in einer Flüssigkeit ist - um so mehr Gas kann in ihr gelöst werden. Durch Absenken des Druckes wird daher Gas in Form von unterschiedlich grossen Blasen aus der Flüssigkeit ausgeschieden.

In der EP-A-0 652 406 sind ein Verfahren und eine Vorrichtung zur Entlüftung einer Flüssigkeit in einem im wesentlichen geschlossenen Flüssigkeitszirkulationssystem der eingangs erwähnten Art beschrieben. Bei diesem Verfahren wird dem Zirkulationssystem eine gewisse Menge an Flüssigkeit entnommen und über eine ein abwechslungsweise offenes und geschlossenes Absperrventil enthaltende Speiseleitung einem geschlossenen Entlüftungsbehälter zugeführt. Mittels einer kontinuierlich laufenden Umwälzpumpe wird im Entlüftungsbehälter bei geschlossenem Absperrventil ein Unterdruck erzeugt, so dass in der Flüssigkeit gelöste Luft freigesetzt wird und in den oberen Teil des Entlüftungsbehälters aufsteigt. Anschliessend wird durch Öffnen des Absperrventils der Druck im Entlüftungsbehälter erhöht, die freigesetzte Luft über eine Behälterentlüftungsventileinheit in die Aussenluft ausgeschieden und die Flüssigkeit abgesaugt und dem Zirkulationssystem wieder zugeführt.

Bei der Durchführung dieses Verfahrens tritt das Problem auf, dass in der Umwälzpumpe ebenfalls Luft freigesetzt wird und sie sich sehr rasch mit Luft füllt. Dadurch wird der sichere Betrieb der Umwälzpumpe stark beeinträchtigt, wenn nicht sogar verunmöglicht. Ausserdem schwappt beim Wechsel von Unterdruck zu Überdruck im Entlüftungsbehälter Flüssigkeit so schnell nach oben, dass es vorkommen kann, dass Flüssigkeit in die Behälterentlüftungsventileinheit eindringt, da diese nicht schnell genug dicht schliesst. Dies führt dazu, dass durch Ablagerung von in der Flüssigkeit gelösten Stoffen die Behälterentlüftungsventileinheit bereits nach kurzer Zeit undicht wird.

Generell sind die bisher bekannten Verfahren und Vorrichtungen der eingangs genannten Art unbefriedigend in bezug auf die Betriebssicherheit und/oder die Entgasungsleistung. Der Erfindung liegt daher die Aufgabe zugrunde, ein Verfahren und eine Vorrichtung zur Entgasung einer Flüssigkeit in einem im wesentlichen geschlossenen System zu schaffen, welche im Vergleich zu den herkömmlichen, vergleichbaren Verfahren und Vorrichtungen eine verbesserte Betriebssicherheit und/oder eine bessere Entgasungsleistung aufweisen. Zudem sollen die Gestehungskosten für die Vorrichtung bei einer langen Lebensdauer möglichst niedrig sein.

Diese Aufgabe wird durch das erfindungsgemässe Verfahren zur Entgasung einer Flüssigkeit in einem im wesentlichen geschlossenen System gelöst, wie es im unabhängigen Patentanspruch 1 definiert ist, und durch die erfindungsgemässe Vorrichtung zur Durchführung dieses Verfahrens, wie sie im unabhängigen Patentanspruch 11 definiert ist. Bevorzugte Ausführungsvarianten ergeben sich aus den abhängigen Patentansprüchen 2 bis 10 und 12 bis 24.

Das Wesen der Erfindung besteht darin, dass in einer Umwälzpumpe - mittels der dem im wesentlichen geschlossenen System zu entgasende Flüssigkeit entnommen, in einen Entgasungsbehälter gesogen und von dort aus dem geschlcssenen System wieder zugeleitet wird - freiwerdendes Gas einem Entgasungsgefäss zugeleitet wird und die Umwälzpumpe in bestimmten Zeitintervallen für kurze Zeit abgeschaltet wird, während dem Entgasungsbehälter gleichzeitig Flüssigkeit zugeführt wird, so dass der Druck im Entgasungsgefäss durch den sich erhöhenden Druck im Entgasungsbehälter über den Atmosphärendruck erhöht und im Entgasungsgefäss sich befindliches Gas über eine Gefässentgasungsventileinheit aus diesem ausgeschieden wird. Die eigentliche Entgasung der Flüssigkeit erfolgt durch Reduzierung des Druckes im Entgasungsbehälter durch Unterbrechen der Flüssigkeitszufuhr bei gleichzeitig laufender Umwälzpumpe. Das im oberen Teil des Entgasungsbehälters sich ansammelnde Gas wird anschliessend durch Erhöhung des Druckes im Entgasungsbehälter durch erneute Flüssigkeitszufuhr aus ihm ausgeschieden.

Beim erfindungsgemässen Verfahren zur Entgasung einer Flüssigkeit wird verhindert, dass sich die Umwälzpumpe mit Gas füllt. Dadurch wird die Betriebssicherheit wesentlich erhöht.

Bei einer bevorzugten Ausführungsvariante kann zwischen Dauerentgasung und temporärer Entgasung umgeschaltet werden, wobei bei der Dauerentgasung Entgasungszyklus auf Entgasungszyklus folgt und bei der temporären Entgasung nach einer bestimmten Anzahl von Entgasungszyklen die Umwälzpumpe für eine gewisse Zeitdauer abgeschaltet wird. Diese Umschaltung erfolgt vorzugsweise automatisch in Abhängigkeit der Gaskonzentration in der Flüssigkeit.

Die automatische Umschaltung hat den Vorteil, dass die Umwälzpumpe bei niederer Gaskonzentration in der Flüssigkeit nur von Zeit zu Zeit läuft und so Energie gespart wird, bei hoher Gaskonzentration hingegen Entgasungszyklus auf Entgasungszyklus folgt.

Im folgenden werden das erfindungsgemässe Verfahren zur Entgasung einer Flüssigkeit in einem im wesentlichen geschlossenen System und die erfindungsgemässe Vorrichtung zur Durchführung dieses Verfahrens unter Bezugnahme auf die beigefügten Zeichnungen und anhand von Ausführungsbeispielen detaillierter beschrieben. Im Anschluss an die Ausführungsbeispiele werden noch weitere mögliche Modifikationen erwähnt. Dabei zeigen:

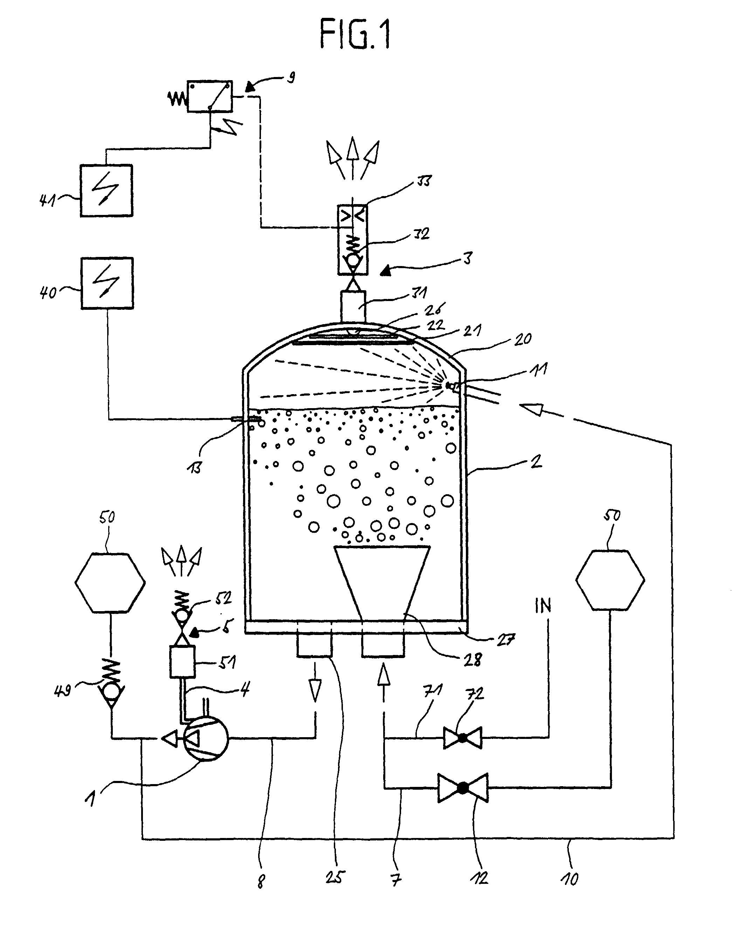

- Figur 1 -: eine Vorrichtung zur Entgasung einer Flüssigkeit in einem im wesentlichen geschlossenen System in schematischer Darstellung, wobei zwei konstruktive Varianten für die Ermittlung, ob eine Umschaltung zwischen einer Dauerentgasung und einer temporären Entgasung erfolgen soll, aufgeführt sind;

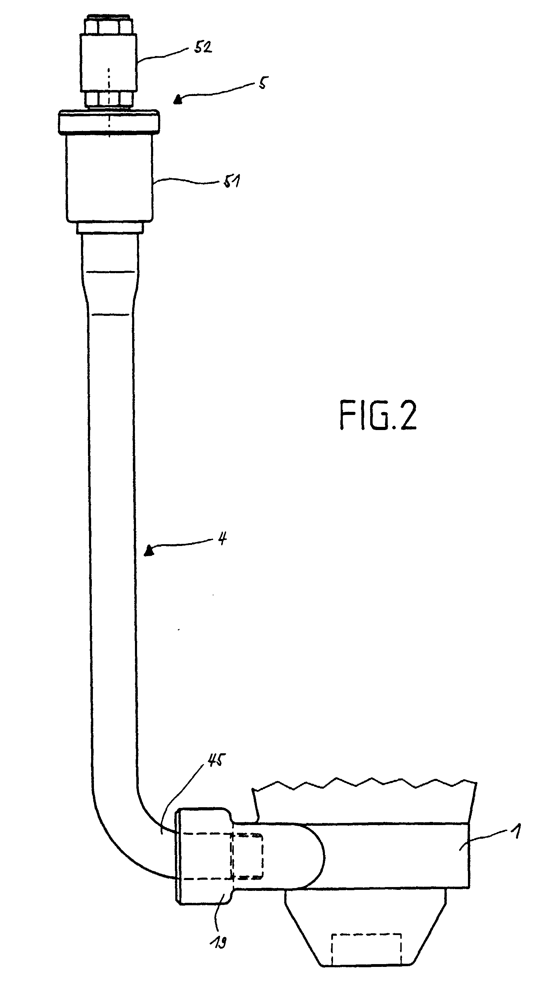

- Figur 2 -: ein an eine ausschnittsweise dargestellte Umwälzpumpe angebrachtes Entgasungsgefäss mit einer Gefässentgasungsventileinheit in Frontansicht;

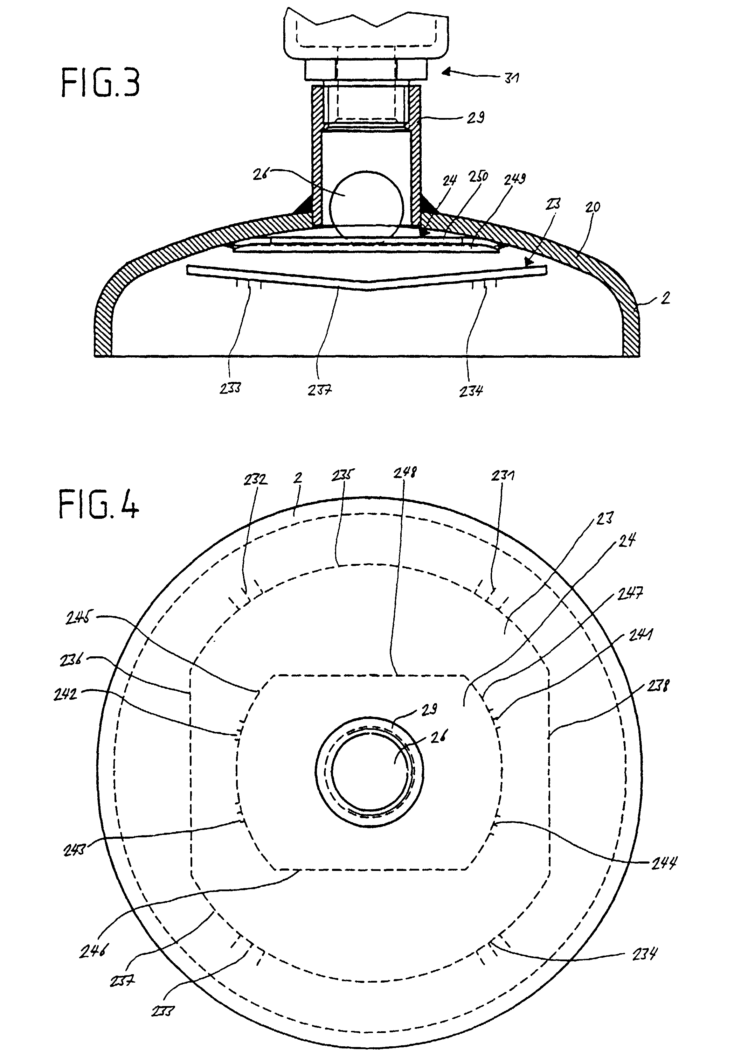

- Figur 3 -: den oberen Teil eines Entgasungsbehälters mit einer ausschnittsweise dargestellten Behälterentgasungsventileinheit und einer Spritzschutzeinrichtung in einer Schnittdarstellung und
- Figur 4 -: eine Draufsicht auf den Entgasungsbehälter und die Spritzschutzeinrichtung gemäss Figur 3, wobei nach der Entfernung der Behälterentgasungsventileinheit von aussen nicht sichtbare Teile gestrichelt dargestellt sind.

### Figur 1

Die dargestellte Vorrichtung zur Entgasung einer Flüssigkeit weist einen im wesentlichen zylinderförmigen, geschlossenen Entgasungsbehälter 2 auf, dessen oberer Abschluss 20 haubenförmig ausgebildet ist. Am Behälterboden 27 ist ein Flüssigkeitseinlass 28 angebracht, dessen in das Innere des Entgasungsbehälters 2 ragender Teil die Form eines sich nach innen erweiternden Trichters hat, so dass einströmende Flüssigkeit gut verteilt wird. Der Flüssigkeitseinlass 28 ist über eine Speiseleitung 7 mit dem im wesentlichen geschlossenen System 50 verbunden, das z.B. ein Heizungssystem sein kann. Die Speiseleitung 7 ist mit einem steuerbaren Absperrorgan 12 versehen, das dazu dient, die Flüssigkeitszufuhr zum Entgasungsbehälter 2 zu unterbrechen. Vorzugsweise ist das Absperrorgan 12 ein von einer Steuereinheit 40, 41 gesteuertes Magnetventil.

Der Behälterboden 27 ist ausserdem mit einem Flüssigkeitsauslass 25 versehen, durch den die Flüssigkeit in eine Ablaufleitung 8 strömt. An der Ablaufleitung 8 ist eine Umwälzpumpe 1 angeordnet, mittels der dem im wesentlichen geschlossenen System 50 zu entgasende Flüssigkeit entnommen, in den Entgasungsbehälter 2 gesogen und von dort aus dem geschlossenen System 50 wieder zugeleitet wird. Die Ablaufleitung 8 ist zwischen der Umwälzpumpe 1 und dem im wesentlichen geschlossenen System 50 mit einem Rückschlagventil 49 versehen, das verhindert, dass Flüssigkeit vom im wesentlichen geschlossenen System 50 direkt zu der Umwälzpumpe 1 zurückfliesst.

An der Umwälzpumpe 1 ist ein Entgasungsgefäss 4 angebracht, das die bei ihrem Betrieb in ihr freiwerdenden Gase aufnimmt. Das Entgasungsgefäss 4 weist eine Gefässentgasungsventileinheit 5 auf, die das Ausscheiden von Gas aus dem Entgasungsgefäss 4 ermöglicht, aber einen Gasrückfluss bei Unterdruck im Entgasungsgefäss 4 verhindert. Die Gefässentgasungsventileinheit 5 umfasst im vorliegenden Fall ein Schwimmerventil 51 und ein Rückschlagventil 52 bekannter Art.

Der Entgasungsbehälter 2 weist eine Behälterentgasungsventileinheit 3 auf, die bei der dargestellten Ausführungsvariante ein Schwimmerventil 31, ein Rückschlagventil 32 und eine Blende 33 umfasst und am oberen, haubenförmig ausgebildeten Abschluss 20 angebracht ist.

Die Entgasung, insbesondere Entlüftung, der Flüssigkeit, z.B. Heizungswasser, erfolgt in nacheinander ausgeführten Entgasungszyklen. In einem Entgasungszyklus wird mittels der Umwälzpumpe 1 dem geschlossenen System 50 Flüssigkeit entnommen, in den Entgasungsbehälter 2 gesogen und von dort aus dem geschlossenen System 50 wieder zugeleitet. In einem ersten Schritt wird der Druck im Entgasungsbehälter 2 reduziert, so dass in der Flüssigkeit gelöstes Gas frei wird, in den oberen Teil des Entgasungsbehälters 2 aufsteigt und sich dort ansammelt, da sein Druck im allgemeinen nicht ausreicht, um durch die Behälterentgasungsventileinheit 3 entweichen zu können. Die Reduzierung des Druckes erfolgt durch Unterbrechen der Flüssigkeitszufuhr durch Schliessen des Absperrorgans 12 bei gleichzeitig laufender Umwälzpumpe 1.

In einem zweiten Schritt wird der Druck im Entgasungsbehälter 2 wieder erhöht, so dass im oberen Teil des Entgasungsbehälters 2 sich befindliches Gas über die Behälterentgasungsventileinheit 3 aus dem Entgasungsbehälter 2 ausgeschieden wird. Die Erhöhung des Druckes erfolgt durch erneute Flüssigkeitszufuhr durch Öffnen des Absperrorgans 12 bei gleichzeitig laufender Umwälzpumpe 1.

Neben der Gasausscheidung durch den Entgasungsbehälter 2 erfolgt auch eine Gasausscheidung durch die Umwälzpumpe 1 selbst, wenn auch in viel kleinerem Rahmen. Das in der Umwälzpumpe 1 bei ihrem Betrieb freiwerdende Gas wird dem Entgasungsgefäss 4 zugeleitet und sammelt sich dort vorerst an, da im Entgasungsgefäss 4 bei laufender Umwälzpumpe 1 ein Unterdruck herrscht. In gewissen Zeitintervallen, z.B. alle 4 bis 10 Minuten, wird die Umwälzpumpe 1 daher für kurze Zeit, z.B. 4 bis 10 Sekunden, abgeschaltet. Dadurch wird der Druck im Entgasungsgefäss 4 erhöht und sich darin befindliches Gas über die Gefässentgasungsventileinheit 5 ausgeschieden. Diese Gasausscheidung aus der Umwälzpumpe 1 ermöglicht erst ihren problemlosen Betrieb. Ohne Gasausscheidung würde sich die Umwälzpumpe 1 mit Gas füllen und ein sicherer Betrieb wäre nicht mehr gewährleistet.

Ein beim plötzlichen Erhöhen des Druckes im Entgasungsbehälter 2 durch erneute Flüssigkeitszufuhr durch Öffnen des Absperrorgans 12 bei gleichzeitig laufender Umwälzpumpe 1 auftretendes Problem ist das Nach-oben-Schwappen der Flüssigkeit im Entgasungsbehälter 2. Mit bisher bekannten Schwimmerventilen kann nicht in befriedigender Weise verhindert werden, dass Flüssigkeit in das Innere des Ventils spritzt. Die Folge davon ist, dass durch Ablagerung von in der Flüssigkeit gelösten Stoffen das Ventil rasch undicht wird.

Um ein Eindringen von Flüssigkeit in das Schwimmerventil 31 weitgehend zu verhindern, sind daher im oberen Teil des Entgasungsbehälters 2 zwei Platten 21, 22 kreuzweise angeordnet. Die beiden Platten 21, 22 sind je an zwei ihrer Schmalseiten am haubenförmigen Abschluss 20 befestigt. Zwischen den freien Schmalseiten und dem haubenförmigen Abschluss 20 bestehen Freiräume, durch die Gas und Flüssigkeit nach oben strömen können. Die nach oben schwappende Flüssigkeit fliesst durch die von den Platten 21, 22 gebildete Schikane und wird so gebremst und in gleichförmige Ströme gelenkt. Durch das Anordnen einer schwimmenden Kugel 26 zwischen der Platte 22 und dem Schwimmerventil 31 wird ein Einspritzen von Flüssigkeit in das Ventilinnere ganz verhindert. Diese Kugel 26 wird beim Auftreffen von Flüssigkeitsstrahlen nach oben gedrückt. Sie kann dicht sein, muss aber nicht unbedingt hundertprozentig abdichten, da die endgültige Abdichtung durch das Schwimmerventil 31 erfolgt.

Bei der dargestellten Vorrichtung ist eine Düse 11 im oberen Teil des Entgasungsbehälters 2 angebracht, die über eine Bypassleitung 10 von der Umwälzpumpe 1 mit Flüssigkeit versorgt wird. Die Düse 11 sprüht Flüssigkeit in den Entgasungsbehälter 2 und zwar sowohl in die darin bereits vorhandene Flüssigkeit als auch in den flüssigkeitsfreien, gasgefüllten Raum. Durch das Einsprühen erfolgt eine Sprühentgasung der eingesprühten Flüssigkeit, und es kommt zu einer gewissen Umwälzung der schon vorhandenen Flüssigkeit. Das Einsprühen von Flüssigkeit als Zusatz zur reinen Unterdruckentgasung ermöglicht eine vielfach höhere Entgasungsleistung. Diese kombinierte Entgasung funktioniert auch bei höheren Temperaturen immer noch einwandfrei, wo eine reine Unterdruckentgasung bereits Schwierigkeiten bereitet.

Unter normalen Umständen ist es nicht notwendig, dauernd zu entgasen, d.h. praktisch ohne Unterbruch - von den kurzen Unterbrüchen für die Umwälzpumpenentgasung einmal abgesehen - Entgasungszyklus auf Entgasungszyklus folgen zu lassen. Wenn sich nur noch wenig oder nahezu kein Gas mehr in der Flüssigkeit befindet, d.h. wenn die Gaskonzentration in der Flüssigkeit korrosionsunkritisch ist, kann die Umwälzpumpe 1 für einige Zeit abgeschaltet werden, um Energie zu sparen und einen unnötigen Verschleiss der Pumpe zu vermeiden. Das erfindungsgemässe Verfahren zur Entgasung einer Flüssigkeit weist daher in einer bevorzugten Variante eine Umschaltung zwischen Dauerentgasung und temporärer Entgasung auf, wobei bei der temporären Entgasung die Umwälzpumpe 1 nur von Zeit zu Zeit läuft. Vorteilhafterweise erfolgt die Umschaltung automatisch in Abhängigkeit der Gaskonzentration in der Flüssigkeit. Zur Ermittlung, ob eine Umschaltung erfolgen soll oder nicht, muss also die Gaskonzentration in der Flüssigkeit in direkter oder indirekter Weise bestimmt werden.

Dazu ist in einer ersten Variante eine auf Flüssigkeitskontakt reagierende Sonde 13 am Entgasungsbehälter 2 angebracht, die ermittelt, ob der Flüssigkeitsstand im Entgasungsbehälter 2 bei Unterdruck ihre Höhe erreicht oder nicht. Die Sonde 13 liefert ihre Messwerte an die Steuereinheit 40, die unter anderem auch die Umwälzpumpe 1 steuert. Um eine Umschaltung in Abhängigkeit der Gaskonzentration in der Flüssigkeit vorzunehmen, ist die Sonde 13 in einer Höhe am Entgasungsbehälter 2 angebracht, die einer Gaskonzentration in der Flüssigkeit entspricht, bei der eine Umschaltung vorgenommen wird. Sinkt der Flüssigkeitsstand im Entgasungsbehälter 2 unter Unterdruck so weit ab, dass die Sonde nicht mehr mit Flüssigkeit in Kontakt ist, erfasst dies die Steuereinheit 40 und gibt den Befehl, dass das in der Flüssigkeit noch reichlich vorhandene Gas weiterhin im Dauerbetrieb ausgeschieden werden soll. Wenn jedoch wenig Gas in der Flüssigkeit gelöst ist, kann sich der Flüssigkeitsspiegel im Entgasungsbehälter 2 nicht mehr oder nur noch sehr wenig absenken, was dazu führt, dass unter Unterdruck die Sonde 13 mit Flüssigkeit umgeben ist. Die Steuereinheit 40 gibt dann den Befehl, dass die Entgasung temporär erfolgen soll.

In einer zweiten Variante wird mittels einer Druckmesseinheit 9 der Druck zwischen dem Rückschlagventil 32 und der Blende 33 der Behälterentgasungsventileinheit 3 und die Zeitdauer, während der dieser Druck anhält, gemessen. Die Messwerte werden an die Steuereinheit 41 geliefert, die unter anderem auch die Umwälzpumpe 1 steuert. Wenn viel Gas im Entgasungsbehälter 2 vorhanden ist und über die Behälterentgasungsventileinheit 3 ausgeschieden wird, d.h. wenn die zu entgasende Flüssigkeit eine hohe Gaskonzentration aufweist, wird der Druck an der Messstelle um ein gewisses Mass ansteigen und eine gewisse Zeit lang vorhanden sein. Bei wenig Gas im Entgasungsbehälter 2 wird der Druck nur sehr wenig oder überhaupt nicht ansteigen. Die Steuereinheit 41 wertet die Messungen dann aus und nimmt entsprechend Umschaltungen zwischen Dauerentgasung und temporärer Entgasung vor.

Durch das Ausscheiden von Gas verliert die im im wesentlichen geschlossenen System 50 enthaltene Flüssigkeit an Volumen. Dieser Volumenverlust kann durch Zufügung von Flüssigkeit von aussen über eine Nachspeiseleitung 71 kompensiert werden. Die Nachspeiseleitung 71 mündet bei der dargestellten Vorrichtung in die Speiseleitung 7, so dass die frisch zugefügte Flüssigkeit noch vor dem Einführen in das im wesentlichen geschlossene System 50 entgast wird. Sie kann aber auch auf viele andere Arten angeordnet werden und beispielsweise in den Entgasungsbehälter 2, die Ablaufleitung 8 oder direkt in das im wesentlichen geschlossene System 50 münden. Die Nachspeiseleitung 71 ist mit einem Absperrorgan 72 versehen, das vorzugsweise ein steuerbares Magnetventil ist.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden Figurenbeschreibungen Bezug genommen.

### Figur 2

Ein rohrförmig ausgebildetes Entgasungsgefäss 4 ist über ein gebogenes Endteil 45 mit einem Anschlussteil 19 der Umwälzpumpe 1 verbunden. Das Entgasungsgefäss 4 ist vertikal angeordnet, mit dem Schwimmerventil 51 und dem Rückschlagventil 52 nach oben gerichtet. Im Anschlussteil 19 herrscht bei laufender Umwälzpumpe 1 ein Unterdruck, und es wird Gas freigesetzt, das in das Entgasungsgefäss 4 geleitet wird. Nach Abschalten der Umwälzpumpe 1 steigt der Druck an und das sich im Entgasungsgefäss 4 befindliche Gas kann über das Schwimmerventil 51 und das Rückschlagventil 52 entweichen.

### Figuren 3 und 4

An den haubenförmigen Abschluss 20 des Entgasungsbehälters 2 ist ein Rohrstutzen 29 angeschweisst, an dem das Schwimmerventil 31 befestigt ist. Eine V-förmig gebogene Platte 23, die zwei runde Schmalseiten 235, 237 und zwei gerade Schmalseiten 236, 238 aufweist, ist so angeordnet, dass ihre runden Schmalseiten 235, 237 am Abschluss 20 anliegen. Dadurch wird die nach oben schwappende Flüssigkeit um die geraden Schmalseiten 236, 238 der Platte 23 herumgelenkt. Die Platte 23 ist mittels vier Schweissverbindungen 231, 232, 233, 234 am Abschluss 20 befestigt. Eine zweite, kleinere Platte 24 weist ebenfalls zwei runde Schmalseiten 245, 247 und zwei gerade Schmalseiten 246, 248 auf, wobei ihre runden Schmalseiten 245, 247 am Abschluss 20 anliegen und ihre geraden Schmalseiten 246, 248 durch die entsprechenden nach oben gebogenen Plattenränder gebildet werden. Die nach oben schwappende Flüssigkeit wird um die geraden Schmalseiten 246, 248 der Platte 24 herumgelenkt. Die Platte 24 ist mittels vier Schweissverbindungen 241, 242, 243, 244 am Abschluss 20 befestigt. Die beiden Platten 23, 24 sind kreuzweise angeordnet und bilden so eine Schikane, durch die die Flüssigkeit fliessen muss, wobei diese dadurch abgebremst wird. Durch eine schwimmende Kugel 26 wird zusätzlich ein Einspritzen der Flüssigkeit in das Innere des Schwimmerventils 31 verhindert.

Zu dem vorbeschriebenen Verfahren zur Entgasung einer Flüssigkeit in einem im wesentlichen geschlossenen System und der Vorrichtung zur Durchführung dieses Verfahrens sind weitere Varianten realisierbar. Hier ausdrücklich erwähnt seien noch:
- Der Entgasungsbehälter 2 kann auch eine andere Form besitzen. Er kann beispielsweise kugelförmig oder ein Ellipsoid sein.
- Der Flüssigkeitseinlass 28 und der Flüssigkeitsauslass 25 müssen nicht unbedingt am Behälterboden 27, sondern können auch seitlich am Entgasungsbehälter 2 angebracht sein. Der Flüssigkeitseinlass 28 kann zudem auch am oberen Abschluss 20 des Entgasungsbehälters 2 angeordnet sein.
- Die Einrichtung zum Bremsen und Lenken der nach oben schwappenden Flüssigkeit kann beliebige, auch nicht plattenförmige Elemente umfassen, die ein Bremsen und/ oder Lenken der Flüssigkeit ermöglichen.
- Die Düse 11 kann auch anders als dargestellt angeordnet werden. Sie kann z.B. am haubenförmigen Abschluss 20 angebracht sein und nach unten sprühen.
- Eine direkte oder indirekte Bestimmung der Gaskonzentration in der Flüssigkeit kann auch auf andere bekannte Arten erfolgen. Eine Möglichkeit wäre eine elekrochemische Messung des Gasgehaltes der Flüssigkeit, was aber komplizierter ist als die aufgezeigten Varianten.

## Patentansprüche

1. Verfahren zur Entgasung einer Flüssigkeit in einem im wesentlichen geschlossenen System, bei dem in einem Entgasungszyklus mittels einer Umwälzpumpe (1) dem geschlossenen System (50) Flüssigkeit entnommen, in einen Entgasungsbehälter (2) gesogen und von dort aus dem geschlossenen System (50) wieder zugeleitet wird, der Druck im Entgasungsbehälter (2) durch Unterbrechen der Flüssigkeitszufuhr bei gleichzeitig laufender Umwälzpumpe (1) reduziert wird, so dass in der Flüssigkeit gelöstes Gas frei wird und in den oberen Teil des Entgasungsbehälters (2) aufsteigt, und durch erneute Flüssigkeitszufuhr der Druck im Entgasungsbehälter (2) wieder erhöht und dadurch im oberen Teil des Entgasungsbehälters (2) sich befindliches Gas über eine Behälterentgasungsventileinheit (3) aus dem Entgasungsbehälter (2) ausgeschieden wird, dadurch gekennzeichnet, dass in der Umwälzpumpe (1) bei ihrem Betrieb freiwerdendes Gas einem Entgasungsgefäss (4) zugeleitet wird, wobei dieses Entgasungsgefäss (4) bei laufender Umwälzpumpe (1) unter Unterdruck steht, und die Umwälzpumpe (1) in bestimmten Zeitintervallen für kurze Zeit abgeschaltet wird, während dem Entgasungsbehälter (2) gleichzeitig Flüssigkeit zugeführt wird, so dass der Druck im Entgasungsgefäss (4) durch den sich erhöhenden Druck im Entgasungsbehälter (2) über den Atmosphärendruck erhöht und im Entgasungsgefäss (4) sich befindliches Gas über eine Gefässentgasungsventileinheit (5) aus diesem ausgeschieden wird.

2. Verfahren nach Anspruch 1, dadurch gekennzeichnet, dass die Umwälzpumpe (1) alle 4 bis 10 Minuten für 4 bis 10 Sekunden abgeschaltet wird.

3. Verfahren nach Anspruch 1 oder 2, dadurch gekennzeichnet, dass zwischen Dauerentgasung und temporärer Entgasung umgeschaltet werden kann, wobei bei der Dauerentgasung Entgasungszyklus auf Entgasungszyklus folgt und bei der temporären Entgasung nach einer bestimmten Anzahl von Entgasungszyklen die Umwälzpumpe (1) für eine gewisse Zeitdauer abgeschaltet wird, die wesentlich länger als die genannte kurze Zeit ist.

4. Verfahren nach Anspruch 3, dadurch gekennzeichnet, dass bei der temporären Entgasung nach 5 bis 100 Entgasungszyklen die Umwälzpumpe (1) für 6 bis 24 Stunden abgeschaltet wird.

5. Verfahren nach Anspruch 3, dadurch gekennzeichnet, dass die Umschaltung zwischen Dauerentgasung und temporärer Entgasung automatisch in Abhängigkeit der Gaskonzentration in der Flüssigkeit erfolgt.

6. Verfahren nach Anspruch 5, dadurch gekennzeichnet, dass zur Ermittlung, ob eine Umschaltung erfolgen soll oder nicht, bestimmt wird, ob der Flüssigkeitsstand im Entgasungsbehälter (2) unter Unterdruck ein bestimmtes Niveau erreicht oder nicht.

7. Verfahren nach Anspruch 5, dadurch gekennzeichnet, dass zur Ermittlung, ob eine Umschaltung erfolgen soll oder nicht, in der Behälterentgasungsventileinheit (3) der Druck des entweichenden Gases und die Zeitdauer, während der dieser Druck anhält, gemessen wird.

8. Verfahren nach einem der Ansprüche 1 bis 7, dadurch gekennzeichnet, dass zusätzlich aus dem geschlossenen System stammende Flüssigkeit mittels einer Düse (11) in den Entgasungsbehälter (2) gesprüht wird.

9. Verfahren nach Anspruch 8, dadurch gekennzeichnet, dass der Sprühvorgang mit der Umwälzpumpe (1) bewerkstelligt wird.

10. Verfahren nach einem der Ansprüche 1 bis 9, dadurch gekennzeichnet, dass zur Kompensation des ausgeschiedenen Gases dem im wesentlichen geschlossenen System (50) von aussen Flüssigkeit zugefügt wird.

11. Vorrichtung zur Durchführung des Verfahrens nach Anspruch 1, die einen Entgasungsbehälter (2) umfasst, der über eine ein steuerbares Absperrorgan (12) aufweisende Speiseleitung (7) und eine eine Umwälzpumpe (1) aufweisende Ablaufleitung (8) mit dem flüssigkeitsführenden, im wesentlichen geschlossenen System (50) verbunden ist, wobei der Entgasungsbehälter (2) mit einer Behälterentgasungsventileinheit (3) versehen ist, die das Ausscheiden von Gas aus dem Entgasungsbehälter (2) ermöglicht, aber einen Gasrückfluss bei Unterdruck im Entgasungsbehälter (2) verhindert, dadurch gekennzeichnet, dass die Umwälzpumpe (1) mit einem Entgasungsgefäss (4) zur Aufnahme des bei ihrem Betrieb in ihr freiwerdenden Gases versehen ist, wobei das Entgasungsgefäss (4) eine Gefässentgasungsventileinheit (5) aufweist, die das Ausscheiden von Gas aus dem Entgasungsgefäss (4) ermöglicht, aber einen Gasrückfluss bei Unterdruck im Entgasungsgefäss (4) verhindert.

12. Vorrichtung nach Anspruch 11, dadurch gekennzeichnet, dass das steuerbare Absperrorgan (12) ein Magnetventil ist.

13. Vorrichtung nach Anspruch 11, dadurch gekennzeichnet, dass die Behälterentgasungsventileinheit (3) und/oder die Gefässentgasungsventileinheit (5) ein Schwimmerventil (31, 51) und ein in Fliessrichtung des entweichenden Gases nach diesem angeordnetes Rückschlagventil (32, 52) umfasst.

14. Vorrichtung nach Anspruch 13, dadurch gekennzeichnet, dass bei der Behälterentgasungsventileinheit (3) eine Blende (33) in Fliessrichtung des entweichenden Gases nach dem Rückschlagventil (32) angeordnet ist.

15. Vorrichtung nach einem der Ansprüche 11 bis 14, dadurch gekennzeichnet, dass im oberen Teil des Entgasungsbehälters (2) eine Einrichtung angeordnet ist, die die beim Wechsel von Unterdruck zu Überdruck nach oben schwappende Flüssigkeit bremst und in gleichförmige Ströme lenkt.

16. Vorrichtung nach Anspruch 15, dadurch gekennzeichnet, dass die genannte Einrichtung mindestens ein im wesentlichen plattenförmiges Element umfasst.

17. Vorrichtung nach Anspruch 15, dadurch gekennzeichnet, dass die genannte Einrichtung mindestens zwei kreuzweise angeordnete Platten (21, 22, 23, 24) umfasst.

18. Vorrichtung nach Anspruch 15, dadurch gekennzeichnet, dass zwischen der genannten Einrichtung und der Behälterentgasungsventileinheit (3) eine Kugel angeordnet ist, die beim Auftreffen von Flüssigkeitsspritzern nach oben gedrückt wird und ein Einspritzen von Flüssigkeit in die Behälterentgasungsventileinheit (3) verhindert.

19. Vorrichtung nach einem der Ansprüche 11 bis 18 zur Durchführung des Verfahrens nach Anspruch 8, dadurch gekennzeichnet, dass am Entgasungsbehälter (2) eine Düse (11) angeordnet ist, die aus dem im wesentlichen geschlossenen System (50) stammende Flüssigkeit in den Entgasungsbehälter (2) sprüht.

20. Vorrichtung nach Anspruch 19 zur Durchführung des Verfahrens nach Anspruch 9, dadurch gekennzeichnet, dass die Düse (11) über eine Bypassleitung (10) von der Umwälzpumpe (1) mit Flüssigkeit versorgt wird.

21. Vorrichtung nach einem der Ansprüche 11 bis 20 zur Durchführung des Verfahrens nach Anspruch 6, dadurch gekennzeichnet, dass am Entgasungsbehälter (2) eine auf Flüssigkeitskontakt reagierende Sonde (13), die einer Steuereinheit (40) für die Umschaltung zwischen Dauerentgasung und temporärer Entgasung Messwerte liefert, in einer Höhe angebracht ist, die einer Gaskonzentration in der Flüssigkeit entspricht, bei der eine Umschaltung vorgenommen wird.

22. Vorrichtung nach einem der Ansprüche 11 bis 20 zur Durchführung des Verfahrens nach Anspruch 7, dadurch gekennzeichnet, dass sie eine Druckmesseinheit (9) aufweist, mit der in der Behälterentgasungsventileinheit (3) der Druck des entweichenden Gases und die Zeitdauer, während der dieser Druck anhält, gemessen wird und die einer Steuereinheit (41) für die Umschaltung zwischen Dauerentgasung und temporärer Entgasung Messwerte liefert.

23. Vorrichtung nach Anspruch 22, dadurch gekennzeichnet, dass die Druckmesseinheit (9) den Druck zwischen dem Rückschlagventil (32) und der Blende (33) misst.

24. Vorrichtung nach einem der Ansprüche 11 bis 23, dadurch gekennzeichnet, dass sie eine Nachspeiseleitung (71) zur Zufügung von Flüssigkeit zum im wesentlichen geschlossenen System (50) aufweist, die mit einem steuerbaren Absperrorgan (72) versehen ist.

## Claims

1. Method for degassing a liquid in a substantially closed system, in which method, in a degassing cycle, liquid is removed from the closed system (50) by means of a circulation pump (1), is sucked into a degassing container (2) and, from there, is fed back to the closed system (50), the pressure in the degassing container (2) is reduced by interrupting the supply of liquid while the circulation pump (1) continues to run, so that gas which is dissolved in the liquid is liberated and rises into the top part of the degassing container (2), and the pressure in the degassing container (2) is increased again by restoring the supply of liquid, and as a result gas which is situated in the top part of the degassing container (2) is discharged from the degassing container (2) via a container-degassing valve unit (3), characterized in that gas which is liberated in the circulation pump (1) while the latter is operating is fed to a degassing vessel (4), this degassing vessel (4) being at reduced pressure while the circulation pump (1) is running, and the circulation pump (1) is switched off for a brief period at certain time intervals, while liquid is at the same time being supplied to the degassing container (2), so that the pressure in the degassing vessel (4) rises above atmospheric pressure as a result of the increasing pressure in the degassing container (2), and gas which is situated in the degassing vessel (4) is discharged from the latter via a vessel-degassing valve unit (5).

2. Method according to Claim 1, characterized in that the circulation pump (1) is switched off for 4 to 10 seconds every 4 to 10 minutes.

3. Method according to Claim 1 or 2, characterized in that it is possible to switch between permanent degassing and temporary degassing; in the case of permanent degassing, one degassing cycle is followed by another degassing cycle, while in the case of temporary degassing, the circulation pump (1) is switched off for a certain time, which is significantly longer than the said brief period, after a certain number of degassing cycles.

4. Method according to Claim 3, characterized in that, in the case of temporary degassing, the circulation pump (1) is switched off for 6 to 24 hours after 5 to 100 degassing cycles.

5. Method according to Claim 3, characterized in that the switching between permanent degassing and temporary degassing takes place automatically as a function of the gas concentration in the liquid.

6. Method according to Claim 5, characterized in that, in order to establish whether or not a switchover is to take place, it is determined whether or not the liquid level in the degassing container (2) under reduced pressure has reached a certain level.

7. Method according to Claim 5, characterized in that, in order to establish whether or not a switchover is to take place, the pressure of the escaping gas and the time for which this pressure endures are measured in the container-degassing valve unit (3).

8. Method according to one of Claims 1 to 7, characterized in that, in addition, liquid coming from the closed system is sprayed into the degassing container (2) by means of a nozzle (11).

9. Method according to Claim 8, characterized in that the spraying operation is effected using the circulation pump (1).

10. Method according to one of Claims 1 to 9, characterized in that liquid is added to the substantially closed system (50) from the outside in order to compensate for the gas which is discharged.

11. Device for carrying out the method according to Claim 1, which comprises a degassing container (2) which is connected to the liquid-carrying, substantially closed system (50) via a feedline (7) which has a controllable shut-off member (12) and an outlet line (8) which has a circulation pump (1), the degassing container (2) being provided with a container-degassing valve unit (3), which enables gas to be discharged from the degassing container (2) but prevents gas from flowing back in the event of a reduced pressure in the degassing container (2), characterized in that the circulation pump (1) is provided with a degassing vessel (4) for receiving the gas which is liberated in the pump when it is operating, the degassing vessel (4) having a vessel-degassing valve unit (5) which enables gas to be discharged from the degassing vessel (4) but prevents gas from flowing back in the event of a reduced pressure in the degassing vessel (4).

12. Device according to Claim 11, characterized in that the controllable shut-off member (12) is a solenoid valve.

13. Device according to Claim 11, characterized in that the container-degassing valve unit (3) and/or the vessel-degassing valve unit (5) comprises a float valve (31, 51) and a non-return valve (32, 52) which is arranged downstream of the float valve in the direction of flow of the escaping gas.

14. Device according to Claim 13, characterized in that, in the container-degassing valve unit (3), a diaphragm (33) is arranged downstream of the non-return valve (32), in the direction of flow of the escaping gas.

15. Device according to one of Claims 11 to 14, characterized in that in the top part of the degassing container (2) there is arranged an apparatus which decelerates the liquid which sloshes upwards in the event of a change from reduced pressure to excess pressure, and diverts this liquid into uniform flows.

16. Device according to Claim 15, characterized in that the said apparatus comprises at least one essentially plate-like element.

17. Device according to Claim 15, characterized in that the said apparatus comprises at least two plates (21, 22, 23, 24) which are arranged crosswise.

18. Device according to Claim 15, characterized in that a ball is arranged between the said apparatus and the container-degassing valve unit (3), which ball, when liquid splashes strike it, is pressed upwards, preventing liquid from splashing into the container-degassing valve unit (3).

19. Device according to one of Claims 11 to 18 for carrying out the method according to Claim 8, characterized in that a nozzle (11) is arranged on the degassing container (2), which nozzle sprays liquid coming from the substantially closed system (50) into the degassing container (2).

20. Device according to Claim 19 for carrying out the method according to Claim 9, characterized in that the nozzle (11) is supplied with liquid from the circulation pump (1) via a bypass line (10).

21. Device according to one of Claims 11 to 20 for carrying out the method according to Claim 6, characterized in that a sensor (13), which reacts to contact with liquid and supplies a control unit (40) for switching over between permanent degassing and temporary degassing with measured values, is arranged on the degassing container (2) at a level which corresponds to a gas concentration in the liquid at which a switchover is carried out.

22. Device according to one of Claims 11 to 20 for carrying out the method according to Claim 7, characterized in that it has a pressure-measuring unit (9), by means of which the pressure of the escaping gas and the time for which this pressure endures are measured in the container-degassing valve unit (3), and which supplies a control unit (41) for switching over between permanent degassing and temporary degassing with measured values.

23. Device according to Claim 22, characterized in that the pressure-measuring unit (9) measures the pressure between the non-return valve (32) and the diaphragm (33).

24. Device according to one of Claims 11 to 23, characterized in that it has a top-up feedline (71) for adding liquid to the substantially closed system (50), which top-up feedline is provided with a controllable shut-off member (72).

## Revendications

1. Procédé pour le dégazage d'un liquide dans un système essentiellement fermé, dans lequel, au cours d'un cycle de dégazage, une pompe de circulation (1) extrait du liquide du système fermé (50), l'aspire dans un récipient de dégazage (2) et de là le renvoie dans le système fermé (50), la pression dans le récipient de dégazage (2) est réduite par interruption de l'apport de liquide, la pompe de circulation (1) continuant de fonctionner en même temps, de sorte que du gaz dissous dans le liquide se libère et monte dans la partie supérieure du récipient de dégazage (2), et la pression dans le récipient de dégazage (2) est à nouveau haussée par renouvellement de l'apport de liquide, et de ce fait du gaz situé dans la partie supérieure du récipient de dégazage (2) est évacué du récipient de dégazage (2) par une unité (3) à clapet de dégazage du récipient, caractérisé en ce que du gaz qui se libère dans la pompe de circulation (1) lorsque cette dernière fonctionne est amené dans une enceinte de dégazage (4), cette enceinte de dégazage (4) étant sous dépression lorsque la pompe de circulation (1) fonctionne, et la pompe de circulation (1) est débranchée pendant une courte durée à des intervalles de temps définis, pendant que du liquide est en même temps apporté dans le récipient de dégazage (2), de sorte que la pression dans l'enceinte de dégazage (4) augmente au-delà de la pression atmosphérique du fait de l'augmentation de la pression dans le récipient de dégazage (2), et du gaz situé dans l'enceinte de dégazage (4) est évacué de cette dernière par une unité (5) à clapet de dégazage de l'enceinte.

2. Procédé selon la revendication 1, caractérisé en ce que la pompe de circulation (1) est débranchée toutes les 4 à 10 minutes pendant 4 à 10 secondes.

3. Procédé selon la revendication 1 ou 2, caractérisé en ce qu'il permet une commutation entre un dégazage permanent et un dégazage temporaire, les cycles de dégazage se succédant les uns aux autres dans le dégazage permanent, tandis que dans le dégazage temporaire, après un nombre défini de cycles de dégazage, la pompe de circulation (1) est débranchée pendant une certaine durée qui est essentiellement plus longue que ladite courte durée.

4. Procédé selon la revendication 3, caractérisé en ce que dans le dégazage temporaire, la pompe de circulation (1) est débranchée pendant 6 à 24 heures après 5 à 100 cycles de dégazage.

5. Procédé selon la revendication 3, caractérisé en ce que la commutation entre le dégazage permanent et le dégazage temporaire s'effectue automatiquement en fonction de la concentration en gaz dans le liquide.

6. Procédé selon la revendication 5, caractérisé en ce que, pour déterminer s'il faut ou non effectuer une commutation, on détermine si le niveau de liquide dans le récipient de dégazage (2) en dépression atteint ou non un niveau défini.

7. Procédé selon la revendication 5, caractérisé en ce que, pour déterminer si une commutation doit s'effectuer ou non, la pression du gaz qui s'échappe et la durée pendant laquelle cette pression se maintient sont mesurées dans l'unité (3) à clapet de dégazage du récipient.

8. Procédé selon l'une des revendications 1 à 7, caractérisé en ce qu'en plus, du liquide provenant du système fermé est pulvérisé dans le récipient de dégazage (2) au moyen d'un gicleur (11).

9. Procédé selon la revendication 8, caractérisé en ce que l'opération de pulvérisation est réalisée à l'aide de la pompe de circulation (1).

10. Procédé selon l'une des revendications 1 à 9, caractérisé en ce que, pour compenser le gaz évacué, du liquide est ajouté depuis l'extérieur dans le système (50) essentiellement fermé.

11. Dispositif en vue de la mise en oeuvre du procédé selon la revendication 1, lequel dispositif comporte un récipient de dégazage (2) qui est relié au système (50) essentiellement fermé contenant du liquide par une conduite d'alimentation (7) présentant un organe de fermeture (12) asservi et par une conduite d'évacuation (8) présentant une pompe de circulation (1), le récipient de dégazage (2) étant doté d'une unité (3) à clapet de dégazage du récipient qui permet l'évacuation de gaz du récipient de dégazage (2) mais qui empêche le retour de gaz lorsque le récipient de dégazage (2) est en dépression, caractérisé en ce que la pompe de circulation (1) est dotée d'une enceinte de dégazage (4) servant à recevoir le gaz qui s'en libère lors de son fonctionnement, l'enceinte de dégazage (4) présentant une unité (5) à clapet de dégazage de l'enceinte qui permet l'évacuation de gaz de l'enceinte de dégazage (4) mais qui empêche le retour de gaz lorsque l'enceinte de dégazage (4) est en dépression.

12. Dispositif selon la revendication 11, caractérisé en ce que l'organe de fermeture (12) asservi est une vanne magnétique.

13. Dispositif selon la revendication 11, caractérisé en ce que l'unité (3) à clapet de dégazage du récipient et/ou l'unité (5) à clapet de dégazage de l'enceinte comportent un clapet à flotteur (31, 51) et un clapet anti-retour (32, 52) agencé en aval du clapet à flotteur dans la direction d'écoulement du gaz qui s'échappe.

14. Dispositif selon la revendication 13, caractérisé en ce que dans l'unité (3) à clapet de dégazage du récipient, un obturateur (33) est agencé en aval du clapet anti-retour (32) dans la direction d'écoulement du gaz qui s'échappe.

15. Dispositif selon l'une des revendications 11 à 14, caractérisé en ce que dans la partie supérieure du récipient de dégazage (2) est agencé une installation qui freine le liquide qui oscille vers le haut lors du passage de la dépression à la surpression, et qui le dévie en flux uniformes.

16. Dispositif selon la revendication 15, caractérisé en ce que ladite installation comporte au moins un élément essentiellement en forme de plaque.

17. Dispositif selon la revendication 15, caractérisé en ce que ladite installation comporte au moins deux plaques (21, 22, 23, 24) agencées en croix.

18. Dispositif selon la revendication 15, caractérisé en ce qu'entre ladite installation et l'unité (3) à clapet de dégazage du récipient est agencée une bille qui, lorsqu'elle est frappée par des jets de liquide, est poussée vers le haut et empêche que le liquide vienne éclabousser l'unité (3) à clapet de dégazage du récipient.

19. Dispositif selon l'une des revendications 11 à 18, en vue de la mise en oeuvre du procédé selon la revendication 8, caractérisé en ce que sur le récipient de dégazage (2) est agencé un gicleur (11) qui pulvérise dans le récipient de dégazage (2) du liquide provenant du système (50) essentiellement fermé.

20. Dispositif selon la revendication 19, en vue de la mise en oeuvre du procédé selon la revendication 9, caractérisé en ce que le gicleur (11) est alimenté en liquide par la pompe de circulation (1) par l'intermédiaire d'une conduite de dérivation (10).

21. Dispositif selon l'une des revendications 11 à 20, en vue de la mise en oeuvre du procédé selon la revendication 6, caractérisé en ce qu'une sonde (13) qui réagit au contact de liquide et qui délivre à une unité de commande (40) des valeurs de mesure servant à la commutation entre un dégazage permanent et un dégazage temporaire, est installée sur le récipient de dégazage (2) à une hauteur qui correspond à une concentration de gaz dans le liquide à laquelle une commutation est effectuée.

22. Dispositif selon l'une des revendications 11 à 20, en vue de la mise en oeuvre du procédé selon la revendication 7, caractérisé en ce qu'il présente une unité (9) de mesure de pression avec laquelle la pression du gaz qui s'échappe et la durée pendant laquelle cette pression se maintient sont mesurées dans l'unité (3) à clapet de dégazage du récipient, et qui délivre à une unité de commande (41) des valeurs de mesure pour la commutation entre un dégazage permanent et un dégazage temporaire.

23. Dispositif selon la revendication 22, caractérisé en ce que l'unité de mesure de pression (9) mesure la pression entre le clapet anti-retour (32) et l'obturateur (33).

24. Dispositif selon l'une des revendications 11 à 23, caractérisé en ce qu'il présente une conduite (71) d'alimentation secondaire pour l'addition de liquide dans le système (50) essentiellement fermé, laquelle conduite est dotée d'un organe de fermeture (72) asservi.
